Europäisches Patentamt

European Patent Office

Office européen des brevets

(19)

(11) Veröffentlichungsnummer : **0 133 853**
**B1**

## (12) EUROPÄISCHE PATENTSCHRIFT

(45) Veröffentlichungstag der Patentschrift :
26.04.89

(21) Anmeldenummer : 83112174.4

(22) Anmeldetag : 03.12.83

(51) Int. Cl.⁴ : **F 16 F 15/02**, F 16 F 9/04,
**B 62 D 33/06**

(54) **Gasdruckfeder.**

(30) Priorität : 13.08.83 DE 3329327

(43) Veröffentlichungstag der Anmeldung :
13.03.85 Patentblatt 85/11

(45) Bekanntmachung des Hinweises auf die Patenterteilung : 26.04.89 Patentblatt 89/17

(84) Benannte Vertragsstaaten :
**AT DE FR GB IT NL SE**

(56) Entgegenhaltungen :
EP--A-- 0 085 188
DE--A-- 2 029 814
DE--A-- 2 113 382
DE--B-- 1 067 316
DE--B-- 1 085 774
FR--A-- 1 568 302
FR--A-- 2 358 284
US--A-- 3 189 303

(73) Patentinhaber : **Firma Carl Freudenberg**
**Höhnerweg 4**
**D-6940 Weinheim/Bergstrasse (DE)**

(72) Erfinder : **Horvat, Borut, Dr.**
**Petra Podleska 10**
**62000 Maribor (YU)**

(74) Vertreter : **Weissenfeld-Richters, Helga, Dr.**
**Höhnerweg 2**
**D-6940 Weinheim/Bergstrasse (DE)**

## Beschreibung

Die Erfindung betrifft eine aktive Gasdruckfeder für die Abstützung eines Maschinenelementes auf einem schwingenden Erreger, bestehend aus einem mit dem Maschinenelement verbundenen Gehäuse, das durch eine bewegliche oder/und nachgiebige und mit dem Erreger verbundene Begrenzungswand geschlossen ist, das ein über den atmosphärischen Druck vorgespanntes Gas mit dem mittleren Druck PM enthält, das eine mit einer Zuleitung verbundene Gaseintrittsöffnung aufweist und eine in die Atmosphäre mündende Gasaustrittsöffnung mit jeweils einem durch eine Verstelleinrichtung betätigten Ventil, wobei die Ventile so betätigt sind, daß sie nie gleichzeitig geöffnet sind und wobei die Zuleitung Gas eines PM übersteigenden Druckes enthält.

Eine solche Gasdruckfeder ist aus der DE-B-1 067 316 bekannt. Die darin enthaltene Verstelleinrichtung hat den Zweck, die räumliche Ausdehnung der Gasdruckfeder konstant zu halten und zur Erreichung dieses Zweckes wird bei einer Einfederung, welche von einer automatischen Druckerhöhung im Innenraum begleitet ist, noch zusätzliche Druckluft in denselben eingespeist, welcher allerdings eine Verhärtung der Federungseigenschaften zur Folge hat. Im umgekehrten Sinne wird bei einer Ausfederung, welche von einer automatischen Druckabsenkung im Innenraum begleitet ist, Luft aus dem Innenraum herausgelassen, was die ohnehin verminderte Federrate noch weiter reduziert. Die Übertragungscharakteristik einer solchen Gasdruckfeder ist dementsprechend wenig befriedigend.

Aus der FR-A-2 358 284 ist eine Gasdruckfeder bekannt, bei der in Reihe zwischen der gefederten Masse und der Gasdruckfeder oder zwischen der Gasdruckfeder und einem Schwingungserreger ein elastisches Element als Kraftumwandler zum Umwandeln der auf die gefederte Masse ausgeübten Kraft angeordnet ist. Die in vertikaler Richtung liegenden Enden des Kraftumwandlers sind zum Abgeben eines Stellsignals mechanisch mit Steuerventilen verbunden, die die Gasdruckfeder zur verbesserten Isolierung und Dämpfung von Schwingungen wahlweise mit einer Druckluftquelle oder der Atmosphäre verbinden. Die mechanische Verbindung macht jedoch komplizierte Maßnahmen zur Unterdrückung von Fehlsteuerungen erforderlich. Der Herstellaufwand der Einrichtung ist dementsprechend hoch.

Der Erfindung liegt die Aufgabe zugrunde, eine aktiv gesteuerte Gasdruckfeder zu zeigen, die bei vermindertem Herstellungsaufwand die Erzielung einer guten Isolierung von Schwingungen einer hohen Frequenz gewährleistet sowie die Erzielung einer guten Dämpfung von Schwingungen im Resonanzbereich.

Diese Aufgabe wird erfindungsgemäß bei einer Gasdruckfeder der eingangs genannten Art mit den kennzeichnenden Merkmalen von Anspruch 1 gelöst. Auf vorteilhafte Ausgestaltungen nehmen die Unteransprüche Bezug.

Die vorgeschlagene Gasdruckfeder weist nur einen einzigen Arbeitsraum auf. Dieser ist mit Gas des mittleren Druckes PM gefüllt, das den eigentlichen Federkörper für das auf dem schwingenden Erreger gelagerte Maschinenelement bildet. Der Arbeitsraum kann konstruktiv dementsprechend einfach gestaltet und beispielsweise am unteren Ende durch einen Federbalg aus Gummi abgeschlossen sein.

Die aktiven Steuerelemente sind zweckmäßig in einem Hauptregler zusammengefaßt, der mit einer Ventil-Kombination für die Steuerung des Gaseintrittes und des Gasaustrittes versehen ist. Der Gaseintrittsöffnung wird dabei Gas eines PM übersteigenden Druckes entweder aus einem Druckerzeuger oder aus einem Reserveausgleichsdruckbehälter zugeführt. Eine Änderung der Ventilstellung des Hauptreglers ergibt sich dann, wenn eine dynamische Beaufschlagung der Gasdruckfeder eine Druckänderung im Arbeitsraum zur Folge hat und wenn die Differenz zwischen dem momentanen Druck im Innenraum des Gehäuses und einem durch eine Drosselöffnung mit dem Innenraum verbundenen Dämpfungsraum einen bestimmten Mindestwert überschreitet. Die dynamische Einfederung des schwingenden Erregers hat in diesem Falle eine Vergrößerung des im Innenraum herrschenden Druckes zur Folge und bewirkt so lange ein Öffnen des Auslaßventiles, bis die vorhandene Druckdifferenz abgebaut ist. Bei einer Ausfederung wird demgegenüber das Einlaßventil geöffnet, bis der erwünschte Druckausgleich hergestellt ist.

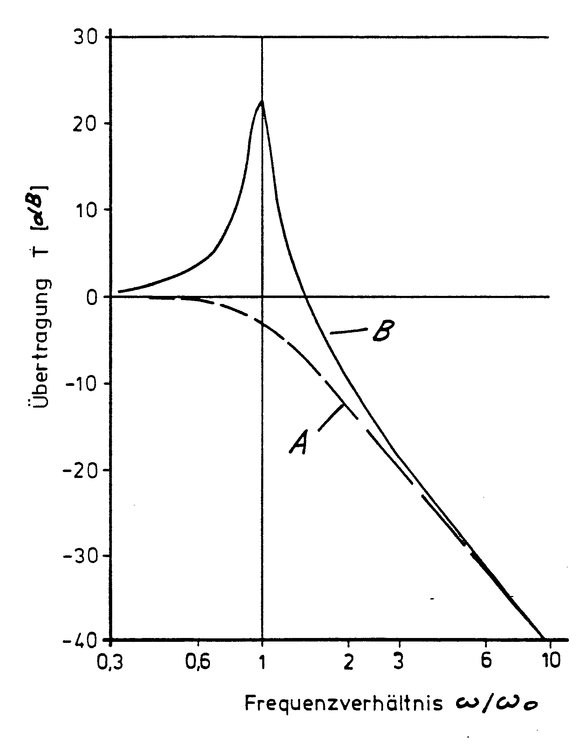

Die solcherart erzielte Dämpfungswirkung verdeutlicht die Kurve A in Figur 3. Sie übersteigt die mit der Kurve B gekennzeichnete Dämpfungscharakteristik üblicher Gasdruckfedern erheblich. Sie wird bei der erfindungsgemäß vorgeschlagenen Ausführung genutzt zur Dämpfung der im Resonanzbereich eingeleiteten Schwingungen, die als außerordentlich störend empfunden werden.

Oberhalb dieses Resonanzbereiches eingeleitete Schwingungen haben demgegenüber nur Druckdifferenzen zur Folge, die für eine Betätigung der Ventile nicht ausreichend sind. Diese bleiben dementsprechend durchgehend geschlossen und es resultiert eine gute Isolierung des gelagerten Maschinenelementes.

Der Resonanzbereich, in dem eine gute Dämpfung erwünscht ist, erstreckt sich im Regelfall von 0 Hz bis ca. dem 1,5 fachen Wert der Eigenfrequenz.

Die Verstelleinrichtung hat somit die Aufgabe, im Resonanzbereich die Druckdifferenz zwischen dem statischen, teilweise gefilterten Federbalginnendruck und dem momentanen dynamischen Druck zu erfassen und entsprechend der Richtung der jeweiligen Abweichung das Ein- bzw. das Auslaßventil zu öffnen und zu schließen, um zusätzliches Druckgas in das Gehäuse hinein- oder Gas des erhöhten Druckes herauszulassen.

Durch diese dynamische Veränderung des jeweils in dem Gehäuse befindlichen Gasvolumens wird die dynamische Komponente des Gehäuseinnendruckes verringert, was zu einer Bedämpfung des abgefederten Maschinenelementes führt. Insbesondere im Bereich der Eigenfrequenz des aus Gasdruckfeder und Masse des Maschinenelementes einschließlich Gehäuse gebildeten Schwingungssystems ist dieser Dämpfungseffekt von großem Vorteil, während bei höheren Erregerfrequenzen die guten Isoliereigenschaften der reinen Gasdruckfeder genutzt werden können.

Die Ventile und die Verstelleinrichtung der vorgeschlagenen Gasdruckfeder bilden zweckmäßigerweise einen Bestandteil des Gehäuses und können zusammen mit diesem an dem abgestützten Maschinenelement festgelegt sein. Dieses ist in schwingungstechnischer Hinsicht weitgehend abgekoppelt von dem Erreger und die über diesen eingeleiteten Schwingungen können sich insofern nicht nachteilig auf die Betriebssicherheit und die Gebrauchsdauer auswirken.

Im Hinblick auf die Erzielung gleicher Durchflußcharakteristika für das Ein- und Auslaßventil unabhängig vom Versorgungsdruck und der gefederten veränderlichen Massen, hat es sich als zweckmäßig erwiesen, wenn der Gaseintrittsöffnung ein Druckregler vorgeschaltet ist, der durch einen Stellkolben gesteuert wird, wobei der Stellkolben eine Meßkammer begrenzt und wobei die Meßkammer durch eine Drosselöffnung mit dem von dem Gehäuse umschlossenen Innenraum verbunden ist. Die Drosselöffnung kann gegebenenfalls einen einstellbaren Querschnitt haben, was eine Veränderung der Ansprechgeschwindigkeit erlaubt. Das Druckuntersetzungsverhältnis des Druckreglers ist im Bereich zwischen 0,1 bis 0,9 angesiedelt, zweckmäßigerweise im Bereich zwischen 0,3 und 0,8. Es beträgt bei einer besonders bewährten Ausführung etwa 0,5.

Neben den vorstehend beschriebenen Einrichtungen zur Regelung des in dem Gehäuse befindlichen Arbeitsdruckes kann die vorgeschlagene Gasdruckfeder einen Niveauregler enthalten, der es erlaubt, das abgefederte Maschinenelement unabhängig von seiner jeweiligen Belastung auf ein bestimmtes Grundniveau einzustellen. Auf die Funktion der Gasdruckfeder an sich hat das Vorhandensein eines derartigen Niveaureglers keinerlei Einfluß.

Die mit der vorgeschlagenen Gasdruckfeder erzielten Vorteile zeigen sich u. a. darin, daß die Ergebnisse in bezug auf die Verringerung der Schwingungen im Vergleich mit denen der passiven Systeme wesentlich besser sind, wie aus Figur 3 ersichtlich. Eine elektronische Steuerung ist nicht erforderlich. Nässe, Störungen einer Stromversorgung und Stöße können daher nicht zu Funktionsstörungen führen. Der Energieaufwand ist niedrig, denn das als ein Frequenzfilter entworfene Reguliersystem benötigt Energie insbesondere nur im Resonanzbereich. Bei höheren Frequenzen wird infolge des Fehlens einer Dämpfungswirkung eine gute Isolierwirkung erzielt, während bei sehr niedrigen Frequenzen von weniger als 0,5 Hz und damit sehr kleinen Druckdifferenzen das Maschinenelement den Bewegungen des Erregers folgt, was beispielsweise in einem Kraftfahrzeug nicht als störend empfunden wird. Bedingt durch diese Eigenschaften sowie die Möglichkeit, die vorgeschlagene Gasdruckfeder zu einem niedrigen Preis zu produzieren, bietet sich deren Verwendung im Kfz- und Eisenbahnwesen und generell im allgemeinen Maschinenbau an. Die vorgeschlagene Gasdruckfeder bietet hier die Gewähr, gerade auch auf unperiodische Erregungen richtig und genügend schnell zu reagieren.

Die Erfindung wird nachfolgend anhand der in der Anlage beigefügten Zeichnungen weiter erläutert. Es zeigen :

Figur 1 eine Gasdruckfeder mit einem im Inneren des Gehäuses angeordneten Hauptregler und einem Druckregler. Der Hauptregler umfaßt als geschlossene Einheit Ein- und Auslaßventil und die zu deren Betätigung benötigte Verstelleinrichtung.

Figur 2 nimmt Bezug auf eine weitere Ausführung des Hauptreglers. Ein- und Auslaßventil werden in diesem Falle durch voneinander unabhängige Stellkolben betätigt.

Figur 3 zeigt die Übertragungsfunktion der vorgeschlagenen Gasdruckfeder im Vergleich zu einer üblichen Gasdruckfeder in graphischer Darstellung.

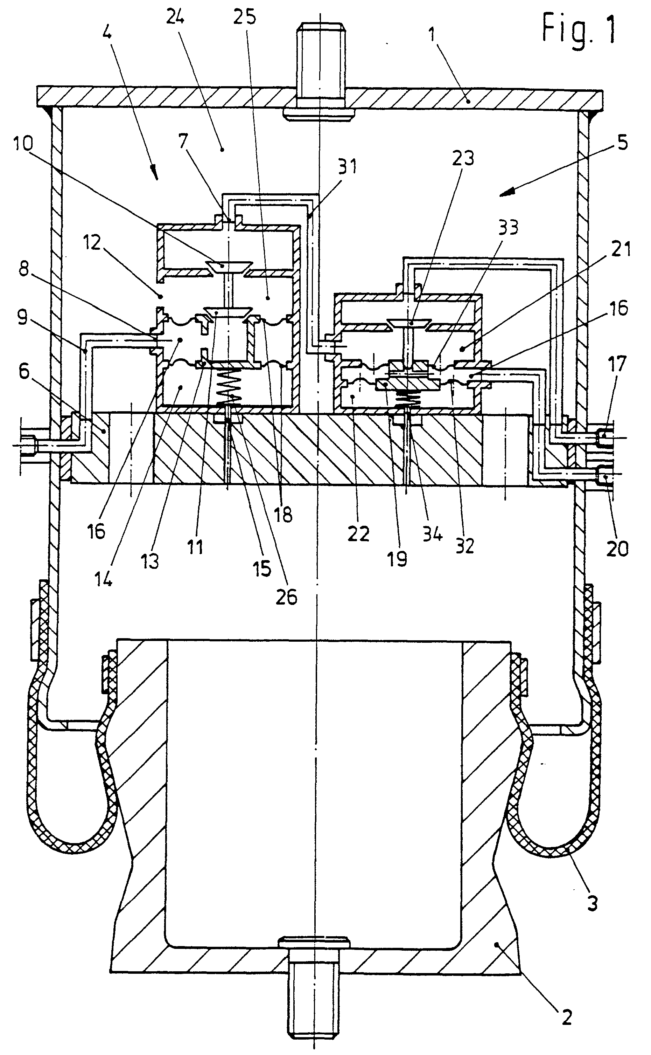

Die in Figur 1 gezeigte Gasdruckfeder besteht aus einem Gehäuse 1 aus einem Stahlrohr, das an der Oberseite durch einen Flansch geschlossen ist. Dieser weist einen mittig angeordneten, senkrecht abstehenden Gewindebolzen auf, durch den eine feste Verbindung mit dem abzustützenden Maschinenelement hergestellt werden kann, beispielsweise dem Fahrerhaus eines Lastkraftwagens.

Die parallel zur Erstreckung des Gehäuses bewegliche Begrenzungswand 2 besteht aus einem rotationssymmetrisch ausgebildeten Teil aus Stahlguß. Es weist einen mittig vorspringenden Gewindebolzen auf, durch den seine Verbindung mit dem unter Betriebsbedingungen schwingenden Erreger möglich ist, beispielsweise der Rahmenkonstruktion eines Lastkraftwagens, und ist durch eine Dichtung, z. B. eine Rollmembrane 3, gasdicht und axial beweglich mit dem Gehäuse 1 verbunden. Die Teile 1, 2 und 3 umschließen somit einen gasdicht geschlossenen Innenraum. Dieser enthält ein vorgespanntes Gas mit dem mittleren Druck PM, beispielsweise Druckluft, und hat die Wirkung einer modifizierten Gasdruckfeder. Im Inneren des Gehäuses 1 ist auf einer Konsole 6 neben dem Druckregler 5 der Druckwandler 4 angeordnet. Dieser weist die Einlaßöffnung 7 auf, die durch eine Zuleitung mit Gas eines PM übersteigenden Druckes beaufschlagt ist sowie die Gasaustrittsöffnung 8, die durch eine Leitung 9 in die Atmosphäre mündet. Hinsichtlich der Montage ergibt sich hierdurch eine wesentliche Vereinfachung. Bei Ausführungen, bei denen der Druckwandler 4 und Druckregler 5 getrennt vom Gehäuse montiert und durch einen Schlauch oder eine Rohrleitung mit dem Gehäuse verbunden sind, resultieren verminderte Abmessungen, was den Einbau ebenfalls erleichtern kann. Ein- und Auslaßventil enthalten jeweils einen Stellkegel 10, 11, die durch eine Stange starr verbunden sind. Diese ist in einem Ausgleichsraum 25 angeordnet der durch die großdimensionierte Ausgleichsöffnung 12 mit dem Innenraum verbunden ist.

Der Ventilsitz des Einlaßventiles 10 ist im Hauptreglergehäuse festgelegt. Der Ventilsitz des Auslaßventiles 11 ist demgegenüber in einem Schwebekolben 13 angeordnet, der Ausgleichsraum 25 und Dämpfungsraum 14 voneinander trennt. Letzterer ist durch eine Drosselöffnung 15 mit dem Innenraum verbunden. Der Schwebekolben selbst umschließt den Entspannungsraum 16, der durch die Gasaustrittsöffnung mit der Atmosphäre verbunden ist und der gegenüber dem Ausgleichs- und dem Dämpfungsraum durch jeweils eine weichelastisch ausgebildete Rollmembrane 18 abgedichtet ist.

Die Funktion des Druckwandlers 4 im Resonanzbereich kann wie folgt beschrieben werden :

Bei einer starken Einfederung des Teiles 2, wie für den Resonanzfall typisch, steigt der Druck im Innenraum 24 und zugleich im Ausgleichsraum 25 des Hauptreglers 4 an. Auch im Dämpfungsraum 14 ist ein Druckanstieg zu verzeichnen, dieser erfolgt jedoch bedingt durch die Enge des Querschnittes der Dämpfungsöffnung 15, stark verzögert so daß sich nach Überwindung der Kraft der Feder 26 zunächst eine Abwärtsbewegung des Schwebekolbens 13 ergibt. Diese Abwärtsbewegung hat ein Öffnen des Auslaßventiles 11 zur Folge und damit eine Verminderung des im Innen- und Ausgleichsraum enthaltenen Gasvolumens über die Gasaustrittsöffnung 8. Die Verminderung hält an, bis die beiderseits auf dem Schwebekolben 13 lastenden Drücke ausgeglichen sind. Ein- und Auslaßventil sind in dieser Betriebssituation wiederum geschlossen.

Bei einer entsprechenden Ausfederung des Teiles 2 resultiert ein spontaner Druckabfall im Innen- und im Ausgleichsraum. Auch in diesem Falle erfolgt die Druckangleichung im Dämpfungsraum 14 bedingt durch die Enge des Querschnittes der Dämpfungsöffnung 15 stark verzögert, wodurch der nunmehr im Dämpfungsraum 14 zunächst höhere Druck nach Überwindung der Kraft der Feder 26 eine Aufwärtsbewegung des Schwebekolbens 13 einschließlich des Auslaßventiles und des Ventilkegels des Einlaßventiles 10 bewirkt. Das Einlaßventil 10 ist dadurch geöffnet und läßt Druckgas über den Ausgleichsraum in den Innenraum solange einströmen, bis die beiderseits auf dem Schwebekolben 13 lastenden Drücke ausgeglichen sind. Ein- und Auslaßventil 10, 11 sind dann wiederum geschlossen. Hochfrequente Schwingungen haben nur kleine Druckveränderungen im Innenraum 24 zur Folge. Diese reichen für eine Betätigung der Ventile nicht aus.

Neben dem Druckwandler 4 ist der Druckregler 5 auf der Konsole 6 angeordnet. Dieser ist durch eine Rohrleitung mit dem Druckgasanschluß 17 verbunden sowie durch eine weitere Rohrleitung 31 mit der Gaseintrittsöffnung des Hauptreglers 4. Der im Inneren angeordnete Stellkolben 19 umschließt gemeinsam mit der beiderseits anschließenden Rollmembran 32, 33, einen Entspannungsraum 16, der durch eine Rohrleitung mit der Entlüftungsöffnung 20 verbunden ist. In ihm ist in einem Schieberstück mit einseitigem Anschlag der Stellkegel des Stellventiles 23 angeordnet der Stellkolben 19 und die beiden Membranen 32 und 33 trennen die Vorkammer 21 von der durch eine Drosselöffnung 34 mit dem Innenraum verbundenen Steuerkammer 22. Das Verhältnis aus der der Vorkammer zugewandten Stirnfläche 21 und der der Steuerkammer 22 zugewandten Stirnfläche beträgt 0,5. Das Verhältnis aus dem Druck im Innenraum und dem am Einlaßventil des Hauptreglers 4 anstehenden Betriebsdruck ist dementsprechend, was von großem Vorteil ist im Hinblick auf die Erzielung einer gleichguten Ansprechempfindlichkeit in positiver und negativer Hinsicht beim Anpassen des aktuellen Druckes an den mittleren Druck PM im Innenraum, und bewirkt eine automatische Anpassung der Gasdruckfeder an veränderliche Massen und Versorgungsdrücke.

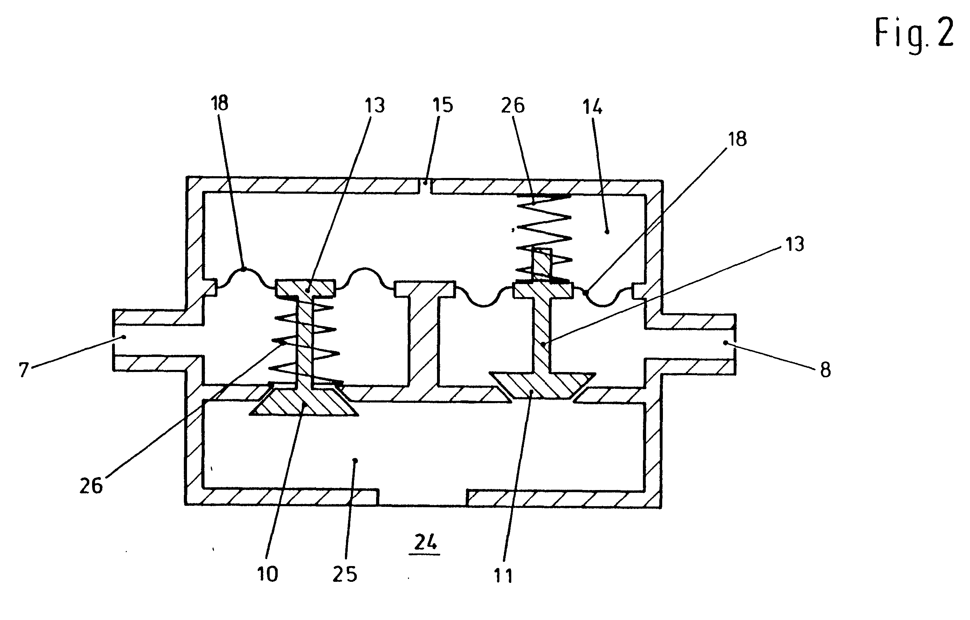

Die in Figur 2 gezeigte Ausführung des Druckwandlers 4 weist unabhängig voneinander betätigte Ein- und Auslaßventile auf. Diese werden durch Schwebekolben 13 betätigt, die durch weichelastisch ausgebildete Rollmembranen 18 gegenüber dem durch die Drosselöffnung 15 vom Innenraum abgetrennten Dämpfungsraum 14 abgedichtet sind. Die Öffnungsrichtung der beiden Ventile ist gegensinnig.

Die Funktion im Resonanzbereich läßt sich wie folgt beschreiben :

Auch bei dieser Ausführung sind im Ruhezustand beide Ventile geschlossen. Der im Innenraum 24 herrschende Druck lastet unmittelbar auf dem Ein- und Auslaßventil sowie durch die Drosselöffnung 15 verzögert auf den mit den Ventilen verbundenen Schwebekolben 13 und Membranen 18.

Bei einem spontanen, die Kraft der Feder 26 übersteigenden Druckanstieg im Innenraum wird das Auslaßventil 11 geöffnet, weil der im Ausgleichsraum 25 auf dem Ventil lastende Druck zunächst größer ist als der auf der Rückseite des Schwebekolbens 13 einschließlich Membrane 18 lastende Druck. Eine Druckabsenkung im Innenraum über das Auslaßventil 11 ist hiervon die Folge.

Bei einer die Kraft der Feder 26 übersteigenden spontanen Druckabsenkung im Innenraum 24 vermag demgegenüber das im Dämpfungsraum 14 enthaltene Gasvolumen wegen der Enge der Dämpfungsöffnung 15 nicht mit gleicher Geschwindigkeit zu entweichen und bewirkt ein Öffnen des Einlaßventiles 10. Das über das Einlaßventil einströmende Gasvolumen bewirkt einen Ausgleich und eine sehr schnelle Angleichung des im Innenraum gefallenen Druckniveaus an den mittleren Druck PM. Auch in diesem Falle hat eine Druckangleichung ein Schließen des Einlaßventiles zur Folge. Eine erneute Betätigung eines der beiden Ventile findet erst bei erneuter Veränderung des Druckes im Innenraum statt.

Hochfrequente Schwingungen sind durch niedrige Amplituden und geringe Differenzdrücke gekennzeichnet. Sie führen bei der vorgeschlagenen Gasdruckfeder mit einem Druckwandler 4 nach den Figuren 1 und 2 nicht zu einer Ventilbetätigung wegen der unterschiedlich wirksamen Durchmesser von Ventilkegel und Membran sowie der Vorspannung der Feder 26.

Zu Schwingungen im Resonanzbereich wurde vorstehend Stellung genommen. Sie haben eine der Amplitude der Schwingungen entsprechende Alternativbewegung des Ein- oder Auslaßventiles zur Folge.

Das in Figur 3 gezeigte Diagramm stellt die Übertragungsfunktion A der vorgeschlagenen Gasdruckfeder derjenigen B einer passenden Ausführung gegenüber. Letztere bewirkt bei Einleitung von Schwingungen im Resonanzbereich $\omega/\omega_o = 1$ ein Aufschaukeln des abgestützten Maschinenelementes, d. h. Schwingungsausschläge, die größer sind als die Amplitude der Erregerschwingung. Ein entsprechender Effekt ist bei der durch die Kurve A charakterisierten, vorschlagsgemäßen Ausführung nicht vorhanden. Die Übertragung hochfrequenter Schwingungen ist in beiden Fällen ähnlich. Sie ist durch eine gute Isolierung gekennzeichnet.

**Patentansprüche**

1. Aktive Gasdruckfeder zur Abstützung eines Maschinenelementes auf einem schwingenden Erreger, bestehend aus einem mit dem Maschinenelement verbundenen Gehäuse (1), das durch eine bewegliche oder/und nachgiebige und mit dem Erreger verbundene Begrenzungswand (3) geschlossen ist, das ein über den atmosphärischen Druck vorgespanntes Gas mit dem mittleren Druck PM enthält, das eine mit einer Zuleitung verbundene Gaseintrittsöffnung (7) aufweist und eine in die Atmosphäre mündende Gasaustrittsöffnung (8) mit jeweils einem durch eine Verstelleinrichtung betätigten Ventil, wobei die Ventile (10, 11) so betätigt sind, daß sie nie gleichzeitig geöffnet sind und wobei die Zuleitung (7) Gas eines PM übersteigenden Druckes enthält, dadurch gekennzeichnet, daß die Verstelleinrichtung aus mindestens einem Druckwandler (4) besteht, der den Differenzdruck zwischen dem momentanen Druck im Innenraum des Gehäuses (1) und einem durch eine Drosselöffnung (15) mit dem Innenraum verbundenen Dämpfungsraum (14) erfaßt und der so mit den Ventilen (10, 11) verbunden ist, daß bei einem Gasdruck oberhalb PM die Gasaustrittsöffnung (8) und bei einem Gasdruck unterhalb PM die Gaseintrittsöffnung (7) geöffnet ist, mit der Maßgabe, daß eine Ventilbetätigung bei Differenzdrücken unterhalb eines Mindestwertes ausgeschlossen ist.

2. Gasdruckfeder nach Anspruch 1, dadurch gekennzeichnet, daß der Druckwandler (4) aus gegebenenfalls durch eine Membran abgedichteten Stellkolben (13) und/oder Druckmeßdosen besteht.

3. Gasdruckfeder nach Anspruch 1 bis 2, dadurch gekennzeichnet, daß die Ventile (10, 11) untereinander verbunden sind.

4. Gasdruckfeder nach Anspruch 1 bis 3, dadurch gekennzeichnet, daß der Gaseintrittsöffnung (7) ein Druckregler (5) vorgeschaltet ist, der durch einen Stellkolben (19') gesteuert wird, daß der Stellkolben (19') eine Meßkammer (22) begrenzt und daß die Meßkammer (22) durch eine Drosselöffnung (34) mit dem von dem Gehäuse (1) umschlossenen Innenraum verbunden ist.

5. Gasdruckfeder nach Anspruch 4, dadurch gekennzeichnet, daß der Druckregler (5) ein Untersetzungsverhältnis von 0,1 bis 0,9 aufweist, vorzugsweise von 0,3 bis 0,8.

**Claims**

1. An active pressurized gas spring for supporting a machine element on a vibration generator, composed of a housing (1) which is connected to the machine element, is closed by means of a movable and/or flexible limiting wall (3) connected to the generator, contains a gas compressed above atmospheric pressure and with mean pressure PM, has a gas inflow port (7) connected to a feedline and a gas outflow port (8) opening into the atmosphere, each with a valve actuated by an adjusting device, the valves (10, 11) being actuated in such a way that they are never opened simultaneously, and the feedline (7) containing gas of a pressure exceeding PM, characterized in that the adjusting device is composed of at least one pressure converter (4) which detects the differential pressure between the instantaneous pressure in the interior of the housing (1) and that of a damping space (14) connected to the interior by means of throttle port (15) and which is connected to the valves (10, 11) in such a way that the gas outflow port (8) is opened at a gas pressure above PM and the gas inflow port (7) is opened at a gas pressure below PM, with the proviso that there is no valve actuation at differential pressures below a minimum value.

2. A pressurized gas spring according to claim 1, characterized in that the pressure converter (4) consists of regulating pistons (13) and/or pressure cells, if appropriate sealed off by means of a diaphragm.

3. A pressurized gas spring according to claim 1 or 2, characterized in that the valves (10, 11) are connected to one another.

4. A pressurized gas spring according to any of claims 1 to 3, characterized in that the gas inflow port (7) is preceded by a pressure governor (5) which is controlled by a reguating piston (19') in that the regulating piston (19') delimits a measuring chamber (22), and in that the measuring chamber (22) is connected by means of a throttle port (34) to the interior surrounded by the housing (1).

5. A pressurized gas spring according to claim 4, characterized in that the pressure governor (5) has a reduction ratio of 0.1 to 0.9, preferably 0.3 to 0.8.

## Revendications

1. Ressort à gaz sous pression actif pour supporter un élément de machine sur une source de vibrations, constitué d'un boîtier (1) relié à l'élément de machine qui est fermé par une paroi (3) mobile et/ou élastique et reliée à la source de vibrations, le boîtier contenant un gaz sous pression moyenne PM dépassant la pression atmosphérique et présentant un orifice d'entrée des gaz (7) relié à une conduite d'alimentation et à l'arrivée de sortie des gaz (8) débouchant dans l'atmosphère pourvus chacun d'une vanne actionnée par un dispositif de réglage, les vannes (10, 11) étant commandées de façon à ne jamais être ouvertes simultanément, tandis que la conduite d'alimentation (7) contient un gaz sous une pression supérieure a PM, caractérisé en ce que le dispositif de réglage comporte au moins un convertisseur de pression (4) qui capte la pression instantanée dans l'enceinte intérieure du boîtier (1) et dans une enceinte d'amortissement (14) reliée à l'enceinte intérieure par un orifice d'amortissement (15) et qui est relié. aux vannes (10, 11) de façon à ce que, si la pression du gaz est supérieure à PM, l'orifice de sortie des gaz (8) est ouvert et que, si la pression du gaz est inférieure à PM, l'orifice d'entrée des gaz (7) est ouvert, avec pour condition que la commande des vannes est exclue si la pression différentielle est inférieure à une valeur minimale.

2. Ressort à gaz sous pression selon la revendication 1, caractérisé en ce que le convertisseur de pression (4) est constitué d'un piston de réglage (13) fermé éventuellement par une membrane et/ou d'une boîte de mesure de pression.

3. Ressort à gaz sous pression selon les revendications 1 et 2, caractérisé en ce que les vannes (10, 11) sont reliées l'une à l'autre.

4. Ressort à gaz sous pression selon les revendications 1 à 3, caractérisé en ce que l'orifice d'entrée des gaz (7) est précédé par un régulateur de pression (5) qui est commandé par un piston de réglage (19'), que le piston de réglage (19') est fermé par une chambre de mesure (22) et que la chambre de mesure (22) est reliée par un orifice de réglage (34) avec l'enceinte intérieure entourée par le boîtier (1).

5. Ressort à gaz sous pression selon la revendication 4, caractérisé en ce que le régulateur de pression (5) présente un rapport de démultiplication de 0,1 à 0,9 et, de préférence, de 0,3 à 0,8.

Fig. 1

Fig.2